# EUROPEAN PATENT SPECIFICATION

(11) **EP 2 894 452 B1**
(45) Date of publication and mention of the grant of the patent: **06.12.2017**
(21) Application number: 12884187.1
(22) Date of filing: 06.09.2012
(51) Int. Cl.: G01M 17/007

(54) **CHASSIS DYNAMOMETER**
DYNAMOMETER FÜR FAHRGESTELL
DYNAMOMÈTRE DE CHÂSSIS

(43) Date of publication of application: 15.07.2015
(73) Proprietor: Toshiba Mitsubishi-Electric Industrial Systems Corporation, Tokyo 104-0031 (JP)
(72) Inventor: NISHIMIYA, Kazuhiko, Tokyo 1040031 (JP)
(74) Representative: Piotrowicz, Pawel Jan Andrzej
(86) International application number: PCT/JP2012/072744
(87) International publication number: WO 2014/038039

(56) References cited:
- JP-A- H0 599 797
- JP-A- H04 369 453
- JP-A- H05 118 961
- JP-A- 2000 346 752
- JP-A- 2002 148 149
- JP-A- 2002 148 149
- JP-B2- 2 976 637

## Description

### TECHNICAL FIELD

The present invention relates to a chassis dynamometer for testing a vehicle by placing wheels of a test vehicle on twin rollers consisting of a load roller and a free roller.

### BACKGROUND ART

A chassis dynamometer has been conventionally proposed as an apparatus for conducting a performance test of a vehicle in a running state. Twin rollers having a pair of two rollers on which wheels of a vehicle are to be placed have been proposed as rollers for use in the chassis dynamometer. Regarding a twin-roller type chassis dynamometer, Japanese Patent Laying-Open No. 5-322710 (PTD 1), for example, discloses a technique of setting a required angle between rollers and wheels by rotatably supporting one of the rollers on a fixed base and moving and adjusting the other roller in an oblique direction relative to a horizontal surface of the fixed base. JP 2 976637 B2 (PTD 2) describes road rollers arranged to the rear of front wheels and in front of rear wheels, and free rollers are arranged in front of the front wheels and to the rear of the rear wheels. A pair of the road roller and the free roller for supporting the front wheels or the rear wheels 6 is located on a movable base, and this movable base can be moved for adjustment by a moving device, and the free roller can be moved for adjustment by a moving device. JP.2002 148149 A PTD 3 describes a free roller Rf is turned while using a point O as a support point so that the free roller Rf position to a road roller Rr is changed for setting a ratio of a load applied to the free roller from a tire T. In this way, if a tire diameter is increased, a high load ratio cannot be set because a load ratio setting area is narrow. The support point for the free roller Rf is allowed to be moved longitudinally. In the case of the large tire T diameter, the load ratio can be set when the fulcrum position O is shifted to a position O' and the free roller Rf is turned on the support point O'.

### SUMMARY OF INVENTION

### TECHNICAL PROBLEM

With a twin-roller type chassis dynamometer, a running state of a vehicle may be tested in a situation where a coefficient of friction of a road surface is varied, such as a test where a state of a low friction road surface as typified by an icy or snowy road is simulated. In this case, a road surface of an arbitrary coefficient of friction can be simulated by changing relative positions of a load roller and a free roller to increase or decrease a load applied to the load roller.

With the change of the relative positions of the load roller and the free roller, however, a vehicle height relative to a floor surface varies. Although it is desirable to test a vehicle while maintaining a constant vehicle height relative to the floor surface so as to accurately recreate the flow of electric waves and cooling air in a space between a lower surface of the vehicle and the road surface, the idea of operating twin rollers from the viewpoint of maintaining a constant vehicle height has not been conventionally disclosed.

The present invention has been made in view of the above problem, and a main object of the present invention is to provide a chassis dynamometer with improved ability to maintain a constant vehicle height relative to a floor surface.

### SOLUTION TO PROBLEM

A chassis dynamometer according to the present invention includes a dynamometer, a load roller coupled to the dynamometer, a free roller juxtaposed to the load roller, and a displacement unit configured to displace one of the load roller and the free roller relative to the other, and tests a vehicle by placing a wheel of the vehicle on the load roller and the free roller. In a positioned state in which the load roller is not displaced relative to the wheel and height of the vehicle is not varied relative to a floor surface, the displacement unit is configured to move the free roller in a direction toward the load roller along a circumferential direction of the wheel to thereby reduce a load applied to the load roller, and to move the free roller in a direction away from the load roller along the circumferential direction of the wheel to thereby increase the load applied to the load roller.

Preferably, in the positioned state, the displacement unit can move the free roller in the direction away from the load roller within the range where a body of the vehicle and the free roller are maintained in a non-contact state.

Preferably, the displacement unit is configured to move the free roller in the direction away from the load roller to the extent that the body of the vehicle and the free roller are maintained in a non-contact state in the positioned state, and further to move at least one of the free roller and the load roller so as to reduce a horizontal distance between a center of the load roller and a center of the wheel, to thereby further increase the load applied to the load roller.

Preferably, in the positioned state, the displacement unit can move the free roller in the direction toward the load roller within the range where the load roller and the free roller are maintained in a non-contact state.

Preferably, the displacement unit is configured to move the free roller in the direction toward the load roller to the extent that the load roller and the free roller are maintained in a non-contact state in the positioned state, and further moves at least one of the free roller and the load roller so as to increase the horizontal distance between the center of the load roller and the center of the wheel, to thereby further reduce the load applied to the load roller.

Preferably, the chassis dynamometer includes a vertical movement unit configured to move both the load roller and the free roller together in a vertical direction.

Preferably, the chassis dynamometer includes a horizontal movement unit configured to move both the load roller and the free roller together in a horizontal direction.

### ADVANTAGEOUS EFFECTS OF INVENTION

According to the chassis dynamometer of the present invention, the ability to maintain a constant vehicle height relative to a floor surface can be improved.

### BRIEF DESCRIPTION OF DRAWINGS

Fig. 1 is a perspective view showing the outline of a structure of a chassis dynamometer in this embodiment.
Fig. 2 is a schematic side view showing the chassis dynamometers with a vehicle placed thereon.
Fig. 3 is a diagram illustrating the principle of operation of the chassis dynamometer when a high coefficient of friction is set.
Fig. 4 is a diagram illustrating the principle of operation of the chassis dynamometer when a low coefficient of friction is set.
Fig. 5 is a first diagram showing movement of a free roller in a state in which a load roller is positioned relative to a wheel.
Fig. 6 is a second diagram showing movement of the free roller in the state in which the load roller is positioned relative to the wheel.
Fig. 7 is a third diagram showing movement of the free roller in the state in which the load roller is positioned relative to the wheel.
Fig. 8 is a fourth diagram showing movement of the free roller in the state in which the load roller is positioned relative to the wheel.
Fig. 9 is a first diagram showing movement of the free roller so as to reduce a horizontal distance between the wheel and the load roller from the state of Fig. 8.
Fig. 10 is a second diagram showing movement of the free roller so as to reduce the horizontal distance between the wheel and the load roller from the state of Fig. 8.
Fig. 11 is a third diagram showing movement of the free roller so as to reduce the horizontal distance between the wheel and the load roller from the state of Fig. 8.
Fig. 12 is a fourth diagram showing movement of the free roller so as to reduce the horizontal distance between the wheel and the load roller from the state of Fig. 8.
Fig. 13 is a first diagram showing movement of the free roller so as to increase the horizontal distance between the wheel and the load roller from the state of Fig. 5.
Fig. 14 is a second diagram showing movement of the free roller so as to increase the horizontal distance between the wheel and the load roller from the state of Fig. 5.

### DESCRIPTION OF EMBODIMENTS

Embodiments of the present invention will be hereinafter described with reference to the drawings, in which the same or corresponding parts are designated by the same reference numbers, and the description thereof will not be repeated.

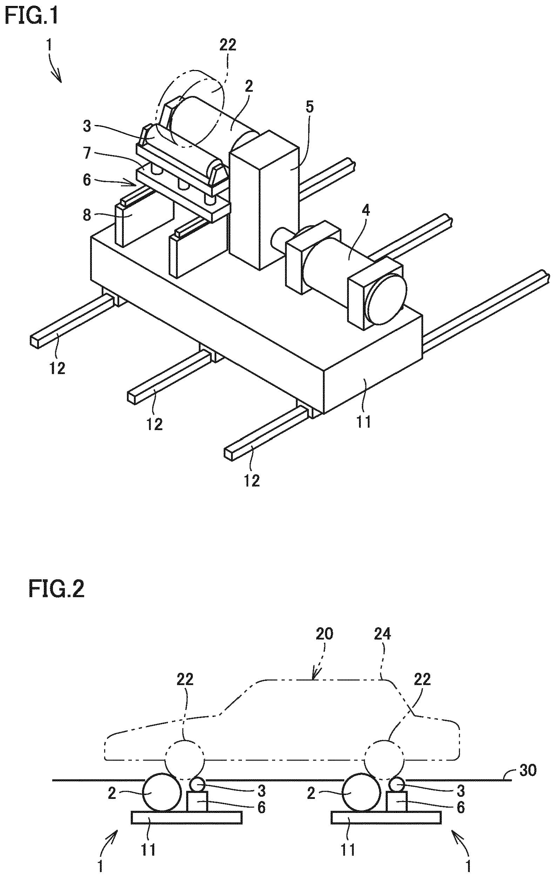

Fig. 1 is a perspective view showing the outline of a structure of a chassis dynamometer 1 in this embodiment. Chassis dynamometer 1 includes a pair of a load roller 2 and a free roller 3 which form twin rollers. Load roller 2 and free roller 3 are juxtaposed to each other with their axes of rotation being parallel to each other. Load roller 2 is coupled to a dynamometer 4 through a gear box 5. Dynamometer 4 absorbs a load applied to load roller 2. Free roller 3 is not coupled to a dynamometer, and rotates with the rotation of wheels of a vehicle. By detecting a rotating speed of free roller 3, a rotating speed of the wheels of the vehicle and a velocity of the vehicle are detected.

Chassis dynamometer 1 further includes a displacement unit 6 that displaces free roller 3 relative to load roller 2. Displacement unit 6 includes a vertical displacement unit 7 that moves free roller 3 in a vertical direction relative to load roller 2, and a horizontal displacement unit 8 that moves free roller 3 in a horizontal direction relative to load roller 2. Displacement unit 6 can move free roller 3 relative to load roller 2 in a two-dimensional manner. Consequently, the position of free roller 3 relative to load roller 2 can be flexibly changed within a prescribed range in a direction orthogonal to a direction of the axis of rotation of free roller 3.

Load roller 2 and free roller 3 are placed on and supported by a base unit 11. Base unit 11 is placed on three rails 12 extending in the horizontal direction. Base unit 11 is provided such that it can reciprocate in the horizontal direction along and over three rails 12. Base unit 11 is also provided such that it can move in the vertical direction orthogonal to the direction in which rails 12 extend. Base unit 11 has a function of a vertical movement unit that moves both load roller 2 and free roller 3 together in the vertical direction, and a function of a horizontal movement unit that moves both load roller 2 and free roller 3 together in the horizontal direction.

Fig. 2 is a schematic side view showing chassis dynamometers 1 with a vehicle 20 placed thereon. Chassis dynamometers 1 are disposed below a floor surface 30. Vehicle 20 to be tested includes a body 24 and four wheels 22. Two of four wheels 22 are illustrated in Fig. 2 which shows the side of vehicle 20. Each wheel 22 of vehicle 20 is placed on the upper sides of load roller 2 and free roller 3. A load of vehicle 20 is received by two rollers, namely, load roller 2 and free roller 3. Load roller 2 and free roller 3 receive and share the load of vehicle 20. Wheel 22 is placed on the two rollers, namely, load roller 2 and free roller 3, and supported by the pair of rollers.

When conducting a performance test of vehicle 20 in a running state, a load acting on load roller 2 of the load of vehicle 20 is varied by supporting wheel 22 by load roller 2 and free roller 3 and changing the relative positions of load roller 2 and free roller 3 by using displacement unit 6. By adjusting the load acting on load roller 2, a coefficient of friction between wheel 22 and load roller 2 can be apparently varied. Consequently, chassis dynamometer 1 can simulate a road surface of an arbitrary coefficient of friction. With chassis dynamometer 1, therefore, it is possible to conduct a test where a state of a low friction road surface is simulated, a test of a vehicle equipped with an ABS (anti-lock braking system), and a test of a vehicle equipped with traction control.

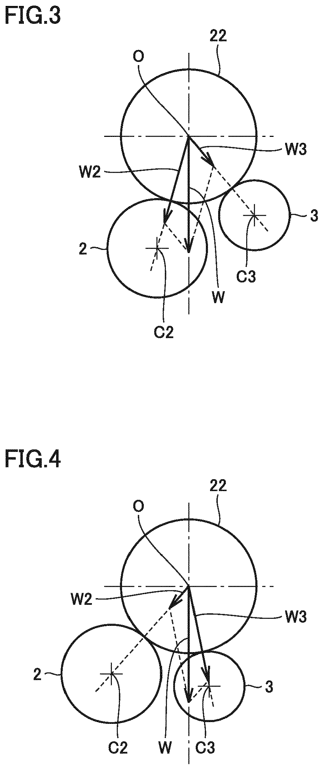

Fig. 3 is a diagram illustrating the principle of operation of chassis dynamometer 1 when a high coefficient of friction is set. Fig. 3 and the subsequent figures schematically show wheel 22 of vehicle 20, load roller 2 and free roller 3 as three circles, and explain a change of positions of load roller 2 and free roller 3 relative to wheel 22. Wheel 22 has a center point O, load roller 2 has a center point C2, and free roller 3 has a center point C3.

When a load W of vehicle 20 is virtually applied in a vertically downward direction to center point O of wheel 22, load W is divided into a component of force W2 acting on load roller 2 and a component of force W3 acting on free roller 3. Component of force W2 acts on load roller 2 along a straight line passing through center point O of wheel 22 and center point C2 of load roller 2. Component of force W3 acts on free roller 3 along a straight line passing through center point O of wheel 22 and center point C3 of free roller 3.

When increasing the apparent coefficient of friction on load roller 2 so as to simulate a state of a high friction road surface, displacement unit 6 is operated to increase the magnitude of component of force W2 acting on load roller 2 of load W of vehicle 20. A friction force is expressed as the product of a coefficient of friction and a normal force, and the weight of a vehicle is constant during actual vehicle running. Thus, by increasing the magnitude of component of force W2 that corresponds to a normal force, the coefficient of friction acting between wheel 22 and load roller 2 apparently increases.

Fig. 4 is a diagram illustrating the principle of operation of chassis dynamometer 1 when a low coefficient of friction is set. When reducing the apparent coefficient of friction on load roller 2 so as to simulate a state of a low friction road surface, displacement unit 6 is operated to reduce the magnitude of component of force W2 acting on load roller 2 of load W of vehicle 20. By reducing the magnitude of component of force W2 that corresponds to a normal force, the coefficient of friction acting between wheel 22 and load roller 2 apparently decreases.

To compare Figs. 3 and 4, the length of an arrow indicating the magnitude of component of force W2 acting on load roller 2 is relatively long in Fig. 3 and relatively short in Fig. 4. By changing the positions of load roller 2 and free roller 3 relative to wheel 22, the magnitude of component of force W2 can be increased or decreased to arbitrarily adjust the apparent coefficient of friction acting between wheel 22 and load roller 2. In this manner, with chassis dynamometer 1, a test where a running state of vehicle 20 on a road surface of an arbitrary coefficient of friction is simulated can be conducted.

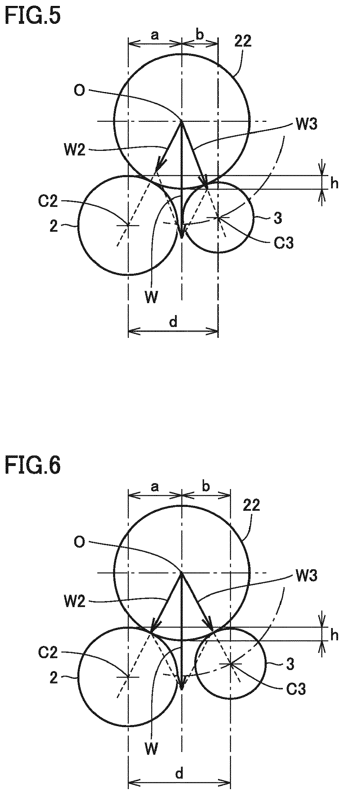

Figs. 5 to 8 are diagrams showing movement of free roller 3 in a state in which load roller 2 is positioned relative to wheel 22. In the following figures, the horizontal distance between center point O of wheel 22 and center point C2 of load roller 2 is indicated by a horizontal distance a, the horizontal distance between center point O of wheel 22 and center point C3 of free roller 3 is indicated by a horizontal distance b, and the horizontal distance between center point C2 of load roller 2 and center point C3 of free roller 3 is indicated by a horizontal distance d. That is, a relation of d = a + b is formed among horizontal distances a, b and d. Further, in the following figures, the vertical distance between a top surface of load roller 2 and a bottom surface of wheel 22 is indicated by a height difference h.

The state in which load roller 2 is positioned relative to wheel 22 as shown in Figs. 5 to 8 is herein referred to as a positioned state. In the positioned state, load roller 2 is not displaced relative to wheel 22, and the height of vehicle 20 relative to floor surface 30 is not varied. Thus, in Figs. 5 to 8, horizontal distance a and height difference h are always constant, and horizontal distance b varies with the movement of free roller 3. Figs. 5 to 8 show a variation in component of force W2 acting on load roller 2 when free roller 3 is displaced along a circumferential direction of wheel 22 indicated with a chain-dotted line in the figures in the positioned state.

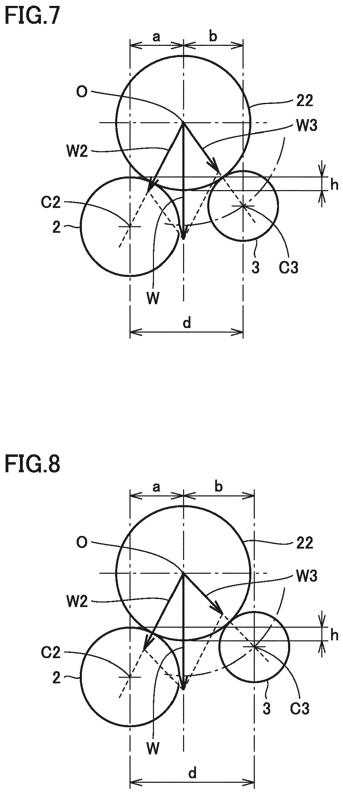

In Fig. 6, free roller 3 moves in a direction away from load roller 2 along the circumferential direction of wheel 22 from the position of free roller 3 shown in Fig. 5. In Fig. 7, free roller 3 moves in the direction away from load roller 2 along the circumferential direction of wheel 22 from the position of free roller 3 shown in Fig. 6. In Fig. 8, free roller 3 moves in the direction away from load roller 2 along the circumferential direction of wheel 22 from the position of free roller 3 shown in Fig. 7. With this movement of free roller 3, the magnitude of component of force W2 applied to load roller 2 of load W of vehicle 20 increases.

When moving free roller 3 in a direction opposite to the above direction, in Fig. 7, free roller 3 moves in a direction toward load roller 2 along the circumferential direction of wheel 22 from the position of free roller 3 shown in Fig. 8. In Fig. 6, free roller 3 moves in the direction toward load roller 2 along the circumferential direction of wheel 22 from the position of free roller 3 shown in Fig. 7. In Fig. 5, free roller 3 moves in the direction toward load roller 2 along the circumferential direction of wheel 22 from the position of free roller 3 shown in Fig. 6. With this movement of free roller 3, the magnitude of component of force W2 applied to load roller 2 of load W of vehicle 20 decreases.

In the positioned state in which load roller 2 is positioned relative to wheel 22, free roller 3 can move in the direction away from load roller 2 within the range where body 24 of vehicle 20 and free roller 3 are maintained in a non-contact state. In the positioned state, free roller 3 can also move in the direction toward load roller 2 within the range where load roller 2 and free roller 3 are maintained in a non-contact state. Displacement unit 6 changes the position of free roller 3 relative to load roller 2 within the range where the separation of free roller 3 from body 24 and load roller 2 is maintained.

In this manner, in chassis dynamometer 1 of this embodiment, free roller 3 is moved in the direction toward load roller 2 along the circumferential direction of wheel 22 by operation of displacement unit 6, to thereby reduce component of force W2 applied to load roller 2. Further, free roller 3 is moved in the direction away from load roller 2 along the circumferential direction of wheel 22, to thereby increase component of force W2 applied to load roller 2. By displacing free roller 3 to arbitrarily adjust component of force W2 acting on load roller 2 in this manner, the coefficient of friction acting between wheel 22 and load roller 2 can be arbitrarily varied, so that a test where an arbitrary coefficient of friction of road surface is simulated can be conducted.

At this time, wheel 22 and load roller 2 are maintained in the state in which they are positioned relative to each other, and height difference h is constant without variation. Even if the coefficient of friction between wheel 22 and load roller 2 is varied, the position of wheel 22 relative to floor surface 30 can be kept constant. Therefore, the ability to maintain a constant height of vehicle 20 relative to floor surface 30, namely, a constant vertical distance between floor surface 30 and body 24 can be improved.

It is noted that methods of reducing component of force W2 applied to load roller 2 to lower the value of the coefficient of friction of road surface to be simulated include, in addition to the method of moving free roller 3 in the direction toward load roller 2 as described above, a method of moving free roller 3 downward while maintaining the horizontal distance between load roller 2 and free roller 3 as will be described later. While the downward movement of free roller 3 provides the advantage that a stable state in which wheel 22 is placed on both load roller 2 and free roller 3 can be readily maintained, it increases the probability that load roller 2 makes contact with body 24.

Thus, when reducing component of force W2 applied to load roller 2, it is desirable to preferentially apply the method of moving free roller 3 in the direction toward load roller 2. By doing so, the component of force applied to load roller 2 can be reduced while height difference h between load roller 2 and wheel 22 is kept constant, thereby reliably preventing interference between load roller 2 and body 24.

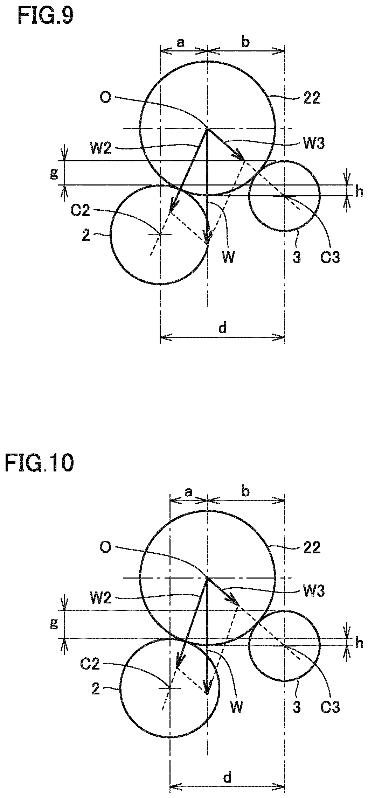

Figs. 9 to 12 are diagrams showing movement of free roller 3 so as to reduce horizontal distance a between wheel 22 and load roller 2 from the state of Fig. 8. Since horizontal distance a between wheel 22 and load roller 2 varies, the positioned state in which load roller 2 is positioned relative to wheel 22 is not maintained. In Figs. 9 to 12, the vertical distance between the top surface of load roller 2 and a top surface of free roller 3 is indicated by a height difference g. Figs. 9 to 12 show a variation in component of force W2 acting on load roller 2 when free roller 3 is displaced so as to vary horizontal distance a between wheel 22 and load roller 2.

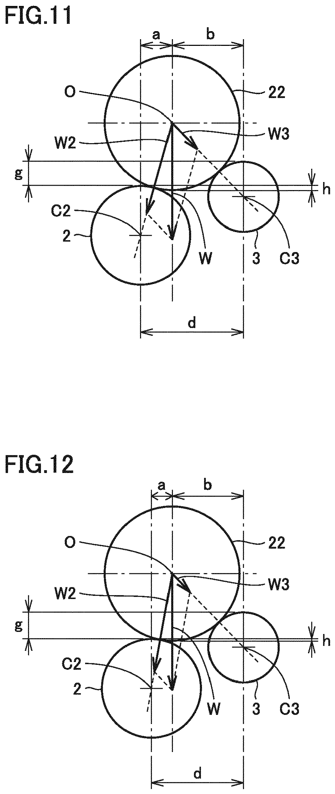

In Fig. 10, free roller 3 moves upward from the position of free roller 3 shown in Fig. 9 so as to reduce horizontal distance a between center point O of wheel 22 and center point C2 of load roller 2 and to reduce horizontal distance d between center point C2 of load roller 2 and center point C3 of free roller 3. In Fig. 11, free roller 3 moves upward from the position of free roller 3 shown in Fig. 10 so as to reduce horizontal distance a and horizontal distance d. In Fig. 12, free roller 3 moves upward from the position of free roller 3 shown in Fig. 11 so as to reduce horizontal distance a and horizontal distance d. With this movement of free roller 3, the magnitude of component of force W2 applied to load roller 2 of load W of vehicle 20 increases.

At this time, free roller 3 moves so as to reduce not only horizontal distance a but also horizontal distance d. This movement of free roller 3 aims to maintain the state in which free roller 3 and body 24 do not make contact with each other, and to maintain the stable state in which wheel 22 is placed on both load roller 2 and free roller 3.

When moving free roller 3 in a direction opposite to the above direction, in Fig. 11, free roller 3 moves downward from the position of free roller 3 shown in Fig. 12 so as to increase horizontal distance a and horizontal distance d. In Fig. 10, free roller 3 moves downward from the position of free roller 3 shown in Fig. 11 so as to increase horizontal distance a and horizontal distance d. In Fig. 9, free roller 3 moves downward from the position of free roller 3 shown in Fig. 10 so as to increase horizontal distance a and horizontal distance d. With this movement of free roller 3, the magnitude of component of force W2 applied to load roller 2 of load W of vehicle 20 decreases.

The position of free roller 3 shown in Fig. 8 represents a state in which free roller 3 has been moved to the extent that body 24 of vehicle 20 and free roller 3 are maintained in a non-contact state, when free roller 3 is moved in the direction away from load roller 2 in the positioned state. In order to avoid contact between free roller 3 and body 24, free roller 3 cannot be moved further in the circumferential direction of wheel 22 from the position of free roller 3 shown in Fig. 8 while the positioned state is maintained. However, if free roller 3 is moved further so as to reduce horizontal distance a, as shown in Figs. 9 to 12, component of force W2 applied to load roller 2 can be further increased. Therefore, a higher maximum value can be set for the coefficient of friction of road surface to be simulated.

All four wheels 22 of vehicle 20 are fixed to the axle, and the positions of wheels 22 relative to body 24 cannot be changed. Thus, when varying a coefficient of friction between only one of four wheels 22 and the road surface, the relative positions of wheel 22 with the varied coefficient of friction and the other three wheels 22 have to be kept constant. With the movement of free roller 3 as shown in Figs. 9 to 12, the vertical and horizontal positions of wheel 22 relative to load roller 2 have been changed. In order to counteract this change of the relative positions, base unit 11 shown in Figs. 1 and 2 may be moved.

That is, when base unit 11 functions as the vertical movement unit and/or horizontal movement unit, both load roller 2 and free roller 3 move together in the vertical direction and/or horizontal direction. By providing base unit 11 with a vertical movement which is opposite in direction and equal in amount to the vertical displacement of wheel 22 relative to load roller 2, and providing base unit 11 with a horizontal movement which is opposite in direction and equal in amount to the horizontal displacement of wheel 22 relative to load roller 2, the change of position of wheel 22 with the movement of the roller is counteracted. Thus, the relative positions of four wheels 22 of vehicle 20 can be maintained. Therefore, even if a higher maximum value is set for the setting range of the coefficient of friction between wheel 22 and load roller 2, the ability to maintain a constant position of wheel 22 relative to floor surface 30 can be improved to further increase the accuracy of the test of vehicle 20.

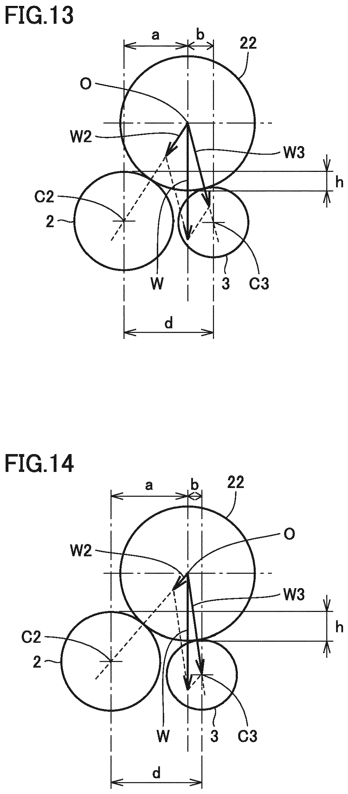

Figs. 13 to 14 are diagrams showing movement of free roller 3 so as to increase horizontal distance a between wheel 22 and load roller 2 from the state of Fig. 5. Since horizontal distance a between wheel 22 and load roller 2 varies, the positioned state in which load roller 2 is positioned relative to wheel 22 is not maintained. Figs. 13 to 14 show a variation in component of force W2 acting on load roller 2 when free roller 3 is displaced so as to vary horizontal distance a between wheel 22 and load roller 2.

In Fig. 13, free roller 3 moves downward from the position of free roller 3 shown in Fig. 5 so as to increase horizontal distance a between center point O of wheel 22 and center point C2 of load roller 2. In Fig. 14, free roller 3 moves downward from the position of free roller 3 shown in Fig. 13 so as to increase horizontal distance a. With this movement of free roller 3, the magnitude of component of force W2 applied to load roller 2 of load W of vehicle 20 decreases. At this time, free roller 3 moves only in the vertical direction, and does not move in the horizontal direction. Thus, even if free roller 3 moves, the non-contact state between load roller 2 and free roller 3 is maintained.

When moving free roller 3 in a direction opposite to the above direction, in Fig. 13, free roller 3 moves upward from the position of free roller 3 shown in Fig. 14 so as to reduce horizontal distance a. In Fig. 5, free roller 3 moves upward from the position of free roller 3 shown in Fig. 13 so as to increase horizontal distance a. With this movement of free roller 3, the magnitude of component of force W2 applied to load roller 2 of load W of vehicle 20 increases.

The position of free roller 3 shown in Fig. 5 represents a state in which free roller 3 has been moved to the extent that load roller 2 and free roller 3 are maintained in a non-contact state, when free roller 3 is moved in the direction toward load roller 2 in the positioned state. In order to avoid contact between load roller 2 and free roller 3, free roller 3 cannot be moved further in the circumferential direction of wheel 22 from the position of free roller 3 shown in Fig. 5 while the positioned state is maintained. However, if free roller 3 is moved further so as to increase horizontal distance a, as shown in Figs. 13 to 14, component of force W2 applied to load roller 2 can be further reduced. Therefore, a lower minimum value can be set for the coefficient of friction of road surface to be simulated. It is noted that a maximum value of the amount of downward movement of free roller 3 is set to the extent that load roller 2 and body 24 are maintained in a non-contact state.

With the movement of free roller 3 shown in Figs. 13 to 14, the vertical and horizontal positions of wheel 22 relative to load roller 2 have been changed. In this case, too, by moving base unit 11 to move both load roller 2 and free roller 3 together in the vertical direction and/or horizontal direction in a manner similar to the above, the relative positions of four wheels 22 of vehicle 20 can be maintained. Therefore, even if a lower minimum value is set for the setting range of the coefficient of friction between wheel 22 and load roller 2, the ability to maintain constant vertical and horizontal positions of wheel 22 relative to floor surface 30 can be improved to further increase the accuracy of the test of vehicle 20.

Although the foregoing description illustrates an example of displacing load roller 2 and free roller 3 relative to each other by moving free roller 3 without displacing load roller 2 relative to base unit 11 of chassis dynamometer 1, this configuration is not restrictive. That is, load roller 2 may be configured such that it can move relative to base unit 11. Displacement unit 6 may be provided such that it can move one or both of load roller 2 and free roller 3 as long as it can displace one of load roller 2 and free roller 3 relative to the other.

Chassis dynamometer 1 in this embodiment can also be readily applied to applications of testing vehicle 20 having different diameters of wheels 22. The set value of horizontal distance a in the positioned state as was described with reference to Figs. 5 to 9 is increased or decreased as appropriate such that the distance between the road surface and body 24 is optimal depending on the diameter of wheel 22. Specifically, horizontal distance a in the positioned state may be reduced for wheel 22 having a small diameter, while horizontal distance a in the positioned state may be increased for the wheel having a large diameter.

Although the embodiments of the present invention have been described above, it should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 chassis dynamometer; 2 load roller; 3 free roller; 4 dynamometer; 6 displacement unit; 7 vertical displacement unit; 8 horizontal displacement unit; 11 base unit; 12 rail; 20 vehicle; 22 wheel; 24 body; 30 floor surface; a, b, d horizontal distance; g, h height difference; C2, C3, O center point; W load; W2, W3 component of force.

## Claims

1. A chassis dynamometer (1) comprising:
a dynamometer (4);
a load roller (2) coupled to said dynamometer (4);
a free roller (3) juxtaposed to said load roller (2); and
a displacement unit (6) configured to displace one of said load roller (2) and said free roller (3) relative to the other,
said chassis dynamometer configured to test a vehicle (20) by placing a wheel (22) of said vehicle (20) on said load roller (2) and said free roller (3), **characterized in that**
in a positioned state in which said load roller (2) is not displaced relative to said wheel (22) and height of the vehicle is not varied relative to a floor surface (30), said displacement unit (6) is configured to move said free roller (3) in a direction toward said load roller (2) along a circumferential direction of said wheel (22) to thereby reduce a load (W2) applied to said load roller (2), and to move said free roller (3) in a direction away from said load roller (2) along the circumferential direction of said wheel (22) to thereby increase the load (W2) applied to said load roller (2).

2. The chassis dynamometer (1) according to claim 1, wherein
in said positioned state, said displacement unit (6) can move said free roller (3) in the direction away from said load roller (2) within the range where a body (24) of said vehicle (20) and said free roller (3) are maintained in a non-contact state.

3. The chassis dynamometer (1) according to claim 2, wherein
said displacement unit (6) is configured to move said free roller (3) in the direction away from said load roller (2) to the extent that said body (24) of said vehicle (20) and said free roller (3) are maintained in a non-contact state in said positioned state, and further to move at least one of said free roller (3) and said load roller (2) so as to reduce a horizontal distance (a) between a center (C2) of said load roller (2) and a center (O) of said wheel (22), to thereby further increase the load (W2) applied to said load roller (2).

4. The chassis dynamometer (1) according to any one of claims 1 to 3, wherein
in said positioned state, said displacement unit (6) can move said free roller (3) in the direction toward said load roller (2) within the range where said load roller (2) and said free roller (3) are maintained in a non-contact state.

5. The chassis dynamometer (1) according to claim 4, wherein
said displacement unit (6) is configured to move said free roller (3) in the direction toward said load roller (2) to the extent that said load roller (2) and said free roller (3) are maintained in a non-contact state in said positioned state, and further to move at least one of said free roller (3) and said load roller (2) so as to increase the horizontal distance (a) between the center (C2) of said load roller (2) and the center (O) of said wheel (22), to thereby further reduce the load (W2) applied to said load roller (2).

6. The chassis dynamometer (1) according to any one of claims 1 to 5, comprising a vertical movement unit (11) configured to move both said load roller (2) and said free roller (3) together in a vertical direction.

7. The chassis dynamometer (1) according to claim 6, comprising a horizontal movement unit (11) configured to move both said load roller (2) and said free roller (3) together in a horizontal direction.

## Patentansprüche

1. Fahrgestell-Dynamometer (1), das Folgendes beinhaltet:
ein Dynamometer (4);
eine Lastrolle (2), die mit dem Dynamometer (4) gekoppelt ist;
eine freie Rolle (3), die in Juxtaposition mit der Lastrolle (2) ist; und
eine Verschiebungseinheit (6), die konfiguriert ist, um eine der Lastrolle (2) und der freien Rolle (3) relativ zur anderen zu verschieben,
wobei das Fahrgestell-Dynamometer konfiguriert ist, um ein Fahrzeug (20) durch Platzieren eines Rades (22) des Fahrzeugs (20) auf der Lastrolle (2) und der freien Rolle (3) zu prüfen,
**dadurch gekennzeichnet, dass**
in einem positionierten Zustand, in dem die Lastrolle (2) relativ zum Rad (22) nicht verschoben wird und die Höhe des Fahrzeugs relativ zu einer Bodenfläche (30) nicht verändert wird, die Verschiebungseinheit (6) konfiguriert ist, um die freie Rolle (3) in einer Richtung zur Lastrolle (2) hin entlang einer Umfangsrichtung des Rades (22) zu bewegen, um dadurch eine an der Lastrolle (2) ausgeübte Last (W2) zu reduzieren, und die freie Rolle (3) in einer Richtung von der Lastrolle (2) weg entlang der Umfangsrichtung des Rades (22) zu bewegen, um dadurch die an der Lastrolle (2) ausgeübte Last (W2) zu erhöhen.

2. Fahrgestell-Dynamometer (1) gemäß Anspruch 1, wobei im positionierten Zustand die Verschiebungseinheit (6) die freie Rolle (3) in der Richtung von der Lastrolle (2) weg innerhalb des Bereichs bewegen kann, in dem ein Körper (24) des Fahrzeugs (20) und die freie Rolle (3) in einem Nicht-Kontakt-Zustand gehalten werden.

3. Fahrgestell-Dynamometer (1) gemäß Anspruch 2, wobei
die Verschiebungseinheit (6) konfiguriert ist, um die freie Rolle (3) in der Richtung von der Lastrolle (2) weg zu bewegen, in dem Maße, dass der Körper (24) des Fahrzeugs (20) und die freie Rolle (3) in dem positionierten Zustand in einem Nicht-Kontakt-Zustand gehalten werden, und ferner mindestens eine der freien Rolle (3) und der Lastrolle (2) zu bewegen, um einen horizontalen Abstand (a) zwischen einer Mitte (C2) der Lastrolle (2) und einer Mitte (0) des Rades (22) zu reduzieren, um dadurch die an der Lastrolle (2) ausgeübte Last (W2) weiter zu erhöhen.

4. Fahrgestell-Dynamometer (1) gemäß einem der Ansprüche 1 bis 3, wobei
in dem positionierten Zustand die Verschiebungseinheit (6) die freie Rolle (3) in der Richtung zur Lastrolle (2) hin innerhalb des Bereichs bewegen kann, in dem die Lastrolle (2) und die freie Rolle (3) in einem Nicht-Kontakt-Zustand gehalten werden.

5. Fahrgestell-Dynamometer (1) gemäß Anspruch 4, wobei
die Verschiebungseinheit (6) konfiguriert ist, um die freie Rolle (3) in der Richtung zur Lastrolle (2) hin zu bewegen, in dem Maße, dass die Lastrolle (2) und die freie Rolle (3) in dem positionierten Zustand in einem Nicht-Kontakt-Zustand gehalten werden, und ferner mindestens eine der freien Rolle (3) und der Lastrolle (2) zu bewegen, um den horizontalen Abstand (a) zwischen der Mitte (C2) der Lastrolle (2) und der Mitte (0) des Rades (22) zu erhöhen, um dadurch die an der Lastrolle (2) ausgeübte Last (W2) weiter zu reduzieren.

6. Fahrgestell-Dynamometer (1) gemäß einem der Ansprüche 1 bis 5, das eine vertikale Bewegungseinheit (11) beinhaltet, die konfiguriert ist, um sowohl die Lastrolle (2) als auch die freie Rolle (3) zusammen in einer vertikalen Richtung zu bewegen.

7. Fahrgestell-Dynamometer (1) gemäß 6, das eine horizontale Bewegungseinheit (11) beinhaltet, die konfiguriert ist, um sowohl die Lastrolle (2) als auch die freie Rolle (3) zusammen in einer horizontalen Richtung zu bewegen.

## Revendications

1. Dynamomètre de châssis (1) comprenant :
un dynamomètre (4) ;
un rouleau de charge (2) couplé audit dynamomètre (4) ;
un rouleau libre (3) juxtaposé audit rouleau de charge (2) ; et
une unité de déplacement (6) configurée pour déplacer l'un parmi ledit rouleau de charge (2) et ledit rouleau libre (3) l'un par rapport à l'autre,
ledit dynamomètre de châssis étant configuré pour tester un véhicule (20) en plaçant une roue (22) dudit véhicule (20) sur ledit rouleau de charge (2) et ledit rouleau libre (3),
**caractérisé en ce que**
dans un état positionné dans lequel ledit rouleau de charge (2) n'est pas déplacé par rapport à ladite roue (22) et la hauteur du véhicule ne varie pas par rapport à une surface de sol (30), ladite unité de déplacement (6) est configurée pour déplacer ledit rouleau libre (3) dans une direction allant vers ledit rouleau de charge (2) dans le sens de la circonférence de ladite roue (22) afin de réduire ainsi une charge (W2) appliquée audit rouleau de charge (2), et pour déplacer ledit rouleau libre (3) dans une direction s'éloignant dudit rouleau de charge (2) dans le sens de la circonférence de ladite roue (22) afin d'augmenter ainsi la charge (W2) appliquée audit rouleau de charge (2).

2. Dynamomètre de châssis (1) selon la revendication 1, dans lequel
dans ledit état positionné, ladite unité de déplacement (6) peut déplacer ledit rouleau libre (3) dans la direction s'éloignant dudit rouleau de charge (2) à l'intérieur de la plage dans laquelle une caisse (24) dudit véhicule (20) et ledit rouleau libre (3) sont maintenus dans un état sans contact.

3. Dynamomètre de châssis (1) selon la revendication 2, dans lequel
ladite unité de déplacement (6) est configurée pour déplacer ledit rouleau libre (3) dans la direction s'éloignant dudit rouleau de charge (2) dans une mesure telle que ladite caisse (24) dudit véhicule (20) et ledit rouleau libre (3) sont maintenus dans un état sans contact dans ledit état positionné, et, en outre, pour déplacer l'un au moins parmi ledit rouleau libre (3) et ledit rouleau de charge (2) de façon à réduire une distance horizontale (a) entre un centre (C2) dudit rouleau de charge (2) et un centre (0) de ladite roue (22) et augmenter ainsi encore plus la charge (W2) appliquée audit rouleau de charge (2).

4. Dynamomètre de châssis (1) selon l'une quelconque des revendications 1 à 3, dans lequel
dans ledit état positionné, ladite unité de déplacement (6) peut déplacer ledit rouleau libre (3) dans la direction allant vers ledit rouleau de charge (2) à l'intérieur de la plage dans laquelle ledit rouleau de charge (2) et ledit rouleau libre (3) sont maintenus dans un état sans contact.

5. Dynamomètre de châssis (1) selon la revendication 4, dans lequel
ladite unité de déplacement (6) est configurée pour déplacer ledit rouleau libre (3) dans la direction allant vers ledit rouleau de charge (2) dans une mesure telle que ledit rouleau de charge (2) et ledit rouleau libre (3) sont maintenus dans un état sans contact dans ledit état positionné, et, en outre, pour déplacer l'un au moins parmi ledit rouleau libre (3) et ledit rouleau de charge (2) de façon à augmenter la distance horizontale (a) entre le centre (C2) dudit rouleau de charge (2) et le centre (0) de ladite roue (22) et réduire ainsi encore plus la charge (W2) appliquée audit rouleau de charge (2).

6. Dynamomètre de châssis (1) selon l'une quelconque des revendications 1 à 5, comprenant une unité de déplacement vertical (11) configurée pour déplacer à la fois ledit rouleau de charge (2) et ledit rouleau libre (3) ensemble dans une direction verticale.

7. Dynamomètre de châssis (1) selon la revendication 6, comprenant une unité de déplacement horizontal (11) configurée pour déplacer à la fois ledit rouleau de charge (2) et ledit rouleau libre (3) ensemble dans une direction horizontale.
